# EUROPÄISCHE PATENTANMELDUNG

(11) **EP 4 201 218 A1**
(43) Veröffentlichungstag der Anmeldung: **28.06.2023**
(21) Anmeldenummer: 21217193.8
(22) Anmeldetag: 22.12.2021
(51) Int. Cl.: A23G 1/00, A23F 3/34, A23F 3/40, A23G 1/48, A23L 2/04, A23L 2/38, A23L 2/56

(54) **VERFAHREN ZUR AUFBEREITUNG EINES KAKAOSTRUNKS FÜR DIE HERSTELLUNG VON LEBENSMITTELN**

(71) Anmelder: Alfred Ritter GmbH & Co. KG, 71111 Waldenbuch (DE)
(72) Erfinder: HOPPE, Tim, 72766 Reutlingen (DE); BACHMEIR, Johann, 72770 Reutlingen (DE); WILL, Hauke, 71093 Weil im Schönbuch (DE)
(74) Vertreter: Karzel, Philipp

(57) **Zusammenfassung**

Die Erfindung betrifft ein Verfahren zur Aufbereitung eines Kakaostrunks für die Herstellung von Lebensmitteln. Die Kakaofrucht wird aufgebrochen und der Kakaostrunk entfernt. Der Kakaostrunk wird gereinigt. Der Kakaostrunk wird getrocknet. Die Trocknung (4) wird derart durchgeführt, dass die Restfeuchte des Kakaostrunks höchstens 15%, vorzugsweise höchstens 10% beträgt.

## Beschreibung

Die Erfindung betrifft ein Verfahren zur Aufbereitung eines Kakaostrunks für die Herstellung von Lebensmitteln gemäß dem Oberbegriff des Anspruchs 1.

Im Inneren der Kakaofrucht befindet sich ein Fruchtknoten, der fünf Fruchtfächer umfasst. In jedem Fruchtfach sitzen an einer axial verlaufenden Plazenta zwei Reihen von Samenanlagen. Über die Plazenta werden die Samenanlagen während des Wachstums und der Reifung mit Nährstoffen versorgt. Die einzelnen Samen werden auch als Kakaobohnen bezeichnet. Die Kakaobohnen sind bei der Ernte etwa 2 cm bis 4 cm lang und 1,2 cm bis 2 cm breit sowie in ihrer Form oval oder elliptisch. Der Fruchtknoten ist in einer süßen Schicht Fruchtfleisch eingebettet, der sogenannten Pulpe.

Bei der Ernte wird die Kakaofrucht geöffnet. Die Kakaobohnen werden von der Schale der Kakaofrucht befreit. Zugleich werden die Kakaobohnen von der Plazenta getrennt. Die Kakaobohnen werden dann zusammen mit dem anhaftenden oder losen Fruchtfleisch aufgehäuft, wobei sich das Fruchtfleisch enzymatisch verflüssigt. Die an den Kakaobohnen anhaftende Flüssigkeit führt zur Einleitung des Fermentationsprozesses. Die Weiterverarbeitung der Kakaobohnen ist allgemein bekannt. Die durch das Fruchtfleisch gebildete Flüssigkeit wird häufig entsorgt. Es ist allerdings auch bekannt, die Flüssigkeit einer Weiterverarbeitung zu unterziehen und die gewonnene Substanz als Süßungsmittel in der Lebensmittelindustrie einzusetzen.

Die Plazenta der Kakaofrucht weist ein äußerst festes Fruchtfleisch auf. Eine enzymatische Verflüssigung ist nicht möglich. Die Plazenta wird daher üblicherweise bei der Austrennung der Kakaobohnen entsorgt. Die Plazenta ist nachfolgend als Kakaostrunk bezeichnet.

Der Erfindung liegt die Aufgabe zugrunde, ein Verfahren anzugeben, das eine noch effektivere Verwertung der Kakaofrucht ermöglicht.

Die Aufgabe wird durch ein Verfahren mit den Merkmalen des Anspruchs 1 gelöst.

Gemäß dem erfindungsgemäßen Verfahren wird die Kakaofrucht aufgebrochen und anschließend der Kakaostrunk entfernt. Danach wird der Kakaostrunk gereinigt und getrocknet. Die Trocknung wird derart durchgeführt, dass die Restfeuchte des Kakaostrunks höchstens 15%, vorzugsweise höchstens 10% beträgt. Besonders vorteilhaft liegt die Restfeuchte des Kakaostrunks in einem Bereich von 8% bis 10%. Es hat sich herausgestellt, dass bei einer derartigen Restfeuchte der Kakaostrunk in einen Zustand der Haltbarkeit versetzt wird. Somit kann durch die geringe Restfeuchte ein mikrobieller Verderb des Kakaostrunks vermieden werden. Folglich kann der Kakaostrunk weiterverarbeitet werden und Einsatz in der Lebensmittelindustrie finden. Dies führt wiederum zu einer erhöhten Verwertbarkeit der gesamten Kakaofrucht. Um die zu erzielende Restfeuchtigkeit sicherzustellen, kann diese mit einem Feuchtigkeitsmessgerät gemessen werden.

Um den mikrobiellen Verderb sicher zu unterbinden, ist es vorteilhaft, dass die Trocknung des Kakaostrunks innerhalb von bis zu 6 Tagen, insbesondere innerhalb von bis zu 24 Stunden nach Öffnen der Kakaofrucht erfolgt. Die Trocknung des Kakaostrunks erfolgt vorzugsweise an der Sonne. Eine derartige Trocknung kann unmittelbar auf der Kakaoplantage vorgenommen werden. Dies ermöglicht eine kostengünstige Trocknung. Alternativ kann die Trocknung des Kakaostrunks auch mittels einer Trocknungsanlage erfolgen. In einer Trocknungsanlage wird der Kakaostrunk vorzugsweise mit einem warmen Luftstrom angeströmt, wodurch die Feuchtigkeit des Kakaostrunks aufgenommen wird. Zur Trocknung des Kakaostrunkes wird dieser vorzugsweise auf einem Siebboden oder einem Gitterblech gelagert. Auf diesen können auch mehrere Kakaostrünke verteilt werden und zugleich ausreichend belüftet werden. Vorzugsweise werden die Kakaostrünke während der Trocknung wiederholt auf dem Siebboden oder dem Gitterblech gewendet, um somit ein gleichmäßiges Trocknen der Kakaostrünke zu ermöglichen.

Es ist vorzugsweise vorgesehen, dass der getrocknete Kakaostrunk zu Kakaostrunkpartikeln zerkleinert wird. Die Zerkleinerung des getrockneten Kakaostrunks kann je nach Verwendung in verschiedene Partikelgrößen erfolgen. Bevorzugt sind die Kakaostrunkpartikel des getrockneten Kakaostrunks Kakaostrunkgranulat. Das Kakaostrunkgranulat wird vorzugsweise durch Häckseln oder grobes Mahlen des getrockneten Kakaostrunkes hergestellt. Alternativ können die Kakaostrunkpartikel des getrockneten Kakaostrunks auch Kakaostrunkpulver sein. Das Kakaostrunkpulver wird vorzugsweise durch feines Mahlen des getrockneten Kakaostrunkes hergestellt. Die Kakaostrunkpartikel können insbesondere im Vergleich zum Kakaostrunk vielseitig weiterverarbeitet werden. Eine Möglichkeit besteht in der Verwendung der Kakaostrunkpartikel als Füllstoff in Lebensmitteln. So können die Kakaostrunkpartikel beispielsweise als Füllstoff in Schokolade verwendet werden. Hierzu sollte das fein gemahlene Kakaostrunkpulver verwendet werden. Demnach werden die Kakaostrunkpartikel für die Verwendung als Füllstoff vorzugsweise durch feines Mahlen des getrockneten Kakaostrunkes hergestellt.

Es kann vorteilhaft auch vorgesehen sein, den Kakaostrunk zur Herstellung eines Getränkes, insbesondere eines Erfrischungsgetränkes oder eines Früchtetees zu verwenden, wobei das Erfrischungsgetränk, insbesondere ein Eistee, eine Limonade oder einer Brause ist. Der Früchtetee ist ein teeähnliches Getränk. Vorzugsweise ist der Kakaostrunk hierfür getrocknet. Besonders bevorzugt ist der getrocknete Kakaostrunk in Kakaostrunkpartikel zerkleinert. Dadurch wird die Oberfläche des Kakaostrunks vergrößert, wodurch dieser in Flüssigkeiten mehr Extrakt abgeben kann.

Zur Herstellung eines Tees wird der aufbereitete, getrocknete Kakaostrunk mit Wasser gebrüht. Besonders bevorzugt werden die Kakaostrunkpartikel zur Herstellung von Tee verwendet. Wie bereits oben ausgeführt, geben die Kakaostrunkpartikel im Vergleich zum lediglich getrockneten Kakaostrunk mehr Extrakt aufgrund der vergrößerten Oberfläche ab. Hierfür ist besonders bevorzugt das Kakaostrunkgranulat zu verwenden. Das Kakaostrunkgranulat weist insbesondere eine Granulatgröße von 2 mm bis 10 mm auf. Dennoch kann es zweckmäßig sein, bei der Herstellung des Tees den gesamten, also unzerkleinerten, getrockneten Kakaostrunk mit Wasser zu brühen.

Es ist vorteilhaft vorgesehen, dass die Brühtemperatur des Wassers in einem Bereich von 80°C bis 95°C liegt. Besonders bevorzugt liegt die Brühtemperatur des Wassers in einem Bereich von 85°C bis 90°C. Das Wasser sollte keinesfalls kochen, da sich andernfalls wasserlösliche Bestandteile und Aromen des getrockneten Kakaostrunkes verflüchtigen.

Die Brühdauer des Tees liegt vorzugsweise in einem Bereich von 5 mm bis 45 min. Besonders bevorzugt liegt die Brühdauer des Tees in einem Bereich von 10 mm bis 30 min. Das besonders bevorzugte Verfahren sieht eine Brühdauer des Tees von in etwa 10 min vor. Wird der Kakaostrunk in etwa 10 min gebrüht, hat dieser die meisten Aromen an das Wasser abgegeben. Selbstverständlich ist die Brühdauer in Abhängigkeit der Brühtemperatur und in Abhängigkeit der Größe der Kakaostrunkpartikel anzupassen.

Es ist insbesondere vorgesehen, dass die Konzentration des Kakaostrunks bezogen auf die zum Brühen eingesetzte Wassermenge in einem Bereich von 0,5% bis 4,0% liegt. Besonders bevorzugt liegt die Konzentration des Kakaostrunks in einem Bereich von 0,8% bis 2,4%. Der Tee weist einen pH-Wert von 3 bis 4, vorzugsweise von 3,5 bis 3,7 auf. In diesen Wertekonstellationen entfaltet der Tee einen besonders ausgeprägten Geschmack.

Es ist vorgesehen, den hergestellten Tee zur Herstellung eines Getränkes, insbesondere eines Erfrischungsgetränkes, zu verwenden. Das Erfrischungsgetränk ist insbesondere ein Eistees, eine Limonade oder einer Brause.

Weitere Merkmale der Erfindung ergeben sich aus der Beschreibung und der Zeichnung, in welchen nachfolgend ein Ausführungsbeispiel der Erfindung im Einzelnen beschrieben ist. Es zeigen:

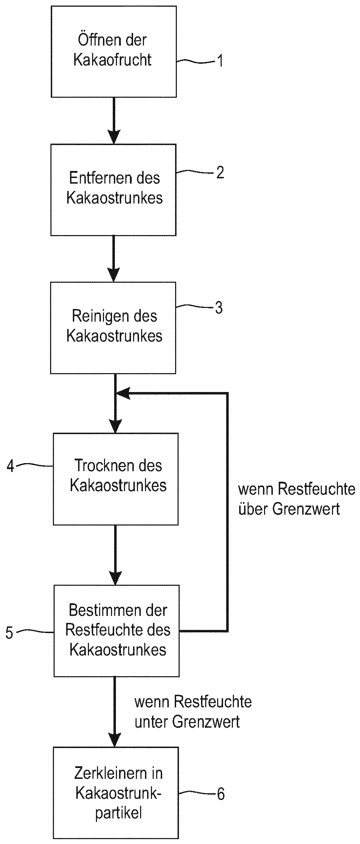

- Fig. 1: in schematischer Darstellung das erfindungsgemäße Verfahren zur Aufbereitung eines Kakaostrunks für die Herstellung von Lebensmitteln.

Fig. 1 zeigt in einer Diagrammdarstellung eine Übersicht der verschiedenen Verfahrensschritte des erfindungsgemäßen Verfahrens. In einem ersten Verfahrensschritt 1 wird die Kakaofrucht zunächst geöffnet. Der Kakaofrucht werden die Kakaobohnen sowie die Pulpe zur Weiterverarbeitung entnommen. Zugleich wird der Kakaostrunk aus der Kakaofrucht im Verfahrensschritt 2 entfernt. Der Kakaostrunk ist die Plazenta der Kakaofrucht, die die Samenanlagen während des Wachstums und der Reifung mit Nährstoffen versorgt. Die Kakaostrünke werden separat von den Kakaobohnen gesammelt, um diese auch separat weiterverarbeiten zu können.

In einem Verfahrensschritt 3 wird der Kakaostrunk gereinigt. Dabei wird der Kakaostrunk unter anderem von anhaftenden Kakaosamen und/oder von der Pulpe der Kakaofrucht befreit.

Im nächsten Verfahrensschritt 4 wird der Kakaostrunk getrocknet. Die Trocknung des Kakaostrunkes muss zügig nach Öffnen der Kakaofrucht erfolgen, um einen mikrobiologischen Verderb des Kakaostrunkes zu verhindern. Daher erfolgt die Trocknung im bevorzugten Ausführungsbeispiel innerhalb von bis zu 6 Tagen nach Öffnen der Kakaofrucht. In einer besonders bevorzugten Ausführung des Verfahrens erfolgt die Trocknung des Kakaostrunkes innerhalb von bis zu 24 Stunden nach Öffnen der Kakaofrucht. Die Trocknungsdauer beträgt vorzugsweise weniger als 6 Tage, insbesondere weniger als 24 Stunden. Die Trocknung der Kakaostrünke sollte auf einem Untergrund erfolgen, welcher eine ausreichende Belüftung der Kakaostrünke zulässt. Daher sind besonders Siebböden oder Gitterbleche, vorzugsweise aus Edelstahl, als Auflage für die Kakaostrünke während des Trocknungsvorganges 4 geeignet. Es kann zweckmäßig sein, den Kakaostrunk an der Sonne trocknen zu lassen. So kann der Kakaostrunk unmittelbar am Ernteort, also auf der Plantage, getrocknet werden. Alternativ kann es zweckmäßig sein, den Kakaostrunk mittels einer Trocknungsanlage zu trocknen. Eine solche Trocknungsanlage stellt einen warmen Luftstrom bereit, der auf die Kakaostrünke geblasen wird. Dadurch können die Kakaostrünke wetterunabhängig getrocknet werden. Um ein gleichmäßiges Trocknen der Kakaostrünke sicherzustellen, werden diese während der Trocknung wiederholt gewendet.

Die Trocknung des Kakaostrunkes erfolgt derart, dass die Restfeuchte des Kakaostrunks höchstens 15%, vorzugsweise höchstens 10% beträgt. Besonders vorteilhaft liegt die Restfeuchte des Kakaostrunks in einem Bereich von 8% bis 10%. Zur Bestimmung der Restfeuchte wird im bevorzugten Ausführungsbeispiel in einem weiteren Verfahrensschritt 5 die Restfeuchte mittels eines Feuchtigkeitsmessgerätes gemessen. Ist der Grenzwert der Restfeuchte des Kakaostrunkes erreicht, kann die Trocknung 4 eingestellt werden. Durch die mittels der Trocknung 4 erzielte Restfeuchte des Kakaostrunkes wird der Kakaostrunk in einen Zustand der Haltbarkeit versetzt. Der mikrobiologische Verderb des Kakaostrunkes ist unterbunden. In diesem Zustand kann der Kakaostrunk gelagert und weiterverarbeitet werden.

Um den Kakaostrunk in der Lebensmittelindustrie vielfältig einsetzen zu können, ist es im Ausführungsbeispiel vorgesehen, den Kakaostrunk zu zerkleinern. Somit wird der getrocknete Kakaostrunk in einem weiteren Verfahrensschritt 6 zu Kakaostrunkpartikeln zerkleinert. Die Zerkleinerung 6 kann auf verschiedene Weisen erfolgen, die insbesondere auch von der anschließenden Verwertung der Kakaostrunkpartikel abhängen. So können die Kakaostrunkpartikel Kakaostrunkgranulat oder Kakaostrunkpulver sein. Das Kakaostrunkgranulat wird bevorzugt durch Häckseln des getrockneten Kakaostrunks oder durch grobes Mahlen des getrockneten Kakaostrunks hergestellt. Das Kakaostrunkgranulat weist vorzugsweise eine Granulatgröße bzw. Körnung von 2 mm bis 10 mm auf. Das Kakaostrunkpulver wird vorzugsweise durch feines Mahlen des getrockneten Kakaostrunkes hergestellt. Das Kakaostrunkpulver weist eine Körnung von vorzugsweise 100 µm bis 200 µm auf. Zur Herstellung des Kakaostrunkgranulats und des Kakaostrunkpulvers können auch andere Herstellungsverfahren zweckmäßig sein. Das Kakaostrunkgranulat findet bevorzugt bei der Herstellung von Tee Verwendung. Das Kakaostrunkpulver findet bevorzugt als Füllstoff für Lebensmittel, insbesondere für Schokolade Verwendung.

Ein weiteres ebenfalls erfindungsgemäßes Verfahren besteht in der Herstellung eines Tees auf Basis des aufbereiteten, getrockneten Kakaostrunks. Hierfür wird der getrocknete Kakaostrunk mit Wasser gebrüht. In der bevorzugten Ausführung des Verfahrens wird für den Tee der Kakaostrunk in bereits zerkleinertem Zustand, also als Kakaostrunkpartikel verwendet. Die Kakaostrunkpartikel weisen gegenüber dem lediglich getrockneten Kakaostrunk als Ganzes eine größere Oberfläche auf, wodurch wasserlösliche Bestandteile und Aromen schneller abgegeben werden können. In einer alternativen Ausführung des Verfahrens kann es jedoch auch zweckmäßig sein, getrocknete Kakaostrünke als Ganzes, also unzerkleinert, aufzubrühen.

Im bevorzugten Ausführungsbeispiel liegt die Brühtemperatur des Wassers in einem Bereich von 80°C bis 95°C. Besonders bevorzugt liegt die Brühtemperatur des Wassers in einem Bereich von 85°C bis 90°C. Das Wasser sollte nicht kochen, da sich andernfalls die wasserlöslichen Bestandteile und Aromen des getrockneten Kakaostrunkes verflüchtigen können.

Die Brühdauer des Tees liegt vorzugsweise in einem Bereich von 5 mm bis 45 min. Besonders bevorzugt liegt die Brühdauer des Tees in einem Bereich von 10 mm bis 30 min. Im bevorzugten Ausführungsbeispiel des erfindungsgemäßen Verfahrens beträgt die Brühdauer des Tees in etwa 10 min. Wird der Kakaostrunk in etwa 10 min gebrüht, hat dieser die meisten wasserlöslichen Bestandteile und Aromen an das Wasser abgegeben. Selbstverständlich ist die Brühdauer in Abhängigkeit der Brühtemperatur und in Abhängigkeit der Größe der Kakaostrunkpartikel anzupassen.

Im Ausführungsbeispiel liegt die Konzentration des Kakaostrunks bezogen auf die zum Brühen eingesetzte Wassermenge in einem Bereich von 0,5% bis 4,0%. Besonders bevorzugt liegt die Konzentration des Kakaostrunks in einem Bereich von 0,8% bis 2,4%. Der Tee weist einen pH-Wert von 3 bis 4, vorzugsweise von 3,5 bis 3,7 auf. In diesen Wertekonstellationen entfaltet der Tee einen besonders ausgeprägten Geschmack.

Der aus dem getrockneten Kakaostrunk erzeugte Tee kann zur Herstellung eines Getränkes, insbesondere eines Erfrischungsgetränkes verwendet werden. So kann der gewonnene Tee zur Herstellung, insbesondere eines Eistees, einer Limonade oder einer Brause verwendet werden. Alternativ kann auch der getrocknete Kakaostrunk als Ganzes oder in Kakaostrunkpartikel zerkleinert unmittelbar zur Herstellung von Getränken, insbesondere Erfrischungsgetränken oder Früchtetee verwendet werden.

## Patentansprüche

1. Verfahren zur Aufbereitung eines Kakaostrunks für die Herstellung von Lebensmitteln,
wobei die Kakaofrucht aufgebrochen und der Kakaostrunk entfernt wird,
wobei der Kakaostrunk gereinigt wird,
wobei der Kakaostrunk getrocknet wird,
**dadurch gekennzeichnet, dass** die Trocknung (4) derart durchgeführt wird, dass die Restfeuchte des Kakaostrunks höchstens 15%, vorzugsweise höchstens 10% beträgt.

2. Verfahren nach Anspruch 1,
**dadurch gekennzeichnet, dass** die Trocknung (4) des Kakaostrunks innerhalb von bis zu 6 Tagen, insbesondere innerhalb von bis zu 24 Stunden nach Öffnen der Kakaofrucht erfolgt.

3. Verfahren nach Anspruch 1 oder 2,
**dadurch gekennzeichnet, dass** die Trocknung (4) des Kakaostrunks an der Sonne oder mittels einer Trocknungsanlage erfolgt.

4. Verfahren nach einem der Ansprüche 1 bis 3,
**dadurch gekennzeichnet, dass** der Kakaostrunk zur Trocknung (4) auf einem Siebboden oder einem Gitterblech gelagert wird.

5. Verfahren nach einem der Ansprüche 1 bis 4,
**dadurch gekennzeichnet, dass** der getrocknete Kakaostrunk zu Kakaostrunkpartikeln zerkleinert wird.

6. Verfahren nach Anspruch 5,
**dadurch gekennzeichnet, dass** die Kakaostrunkpartikel des getrockneten Kakaostrunks Kakaostrunkgranulat sind.

7. Verfahren nach Anspruch 5,
**dadurch gekennzeichnet, dass** die Kakaostrunkpartikel des getrockneten Kakaostrunks Kakaostrunkpulver sind.

8. Verfahren zur Herstellung eines Tees mit einem gemäß dem Verfahren nach Anspruch 1 aufbereiteten Kakaostrunk,
**dadurch gekennzeichnet, dass** der aufbereitete Kakaostrunk mit Wasser gebrüht wird.

9. Verfahren nach Anspruch 8,
**dadurch gekennzeichnet, dass** die Brühtemperatur des Wassers in einem Bereich von 80°C bis 95°C, vorzugsweise in einem Bereich von 85°C bis 90°C liegt.

10. Verfahren nach Anspruch 8 oder 9,
**dadurch gekennzeichnet, dass** die Brühdauer des Tees in einem Bereich von 5 mm bis 45 min, vorzugsweise von 10 mmbis 30 min liegt.

11. Verfahren nach einem der Ansprüche 8 bis 10,
**dadurch gekennzeichnet, dass** die Konzentration des Kakaostrunks bezogen auf die zum Brühen eingesetzte Wassermenge in einem Bereich von 0,5% bis 4,0%, vorzugsweise 0,8% bis 2,4% liegt.

12. Verfahren nach einem der Ansprüche 8 bis 11,
**dadurch gekennzeichnet, dass** der Tee einen pH-Wert von 3 bis 4, vorzugsweise von 3,5 bis 3,7 aufweist.

13. Verwendung eines Kakaostrunks zur Herstellung eines Getränkes, insbesondere eines Erfrischungsgetränkes oder eines Früchtetees, wobei das Erfrischungsgetränk vorzugsweise ein Eistee, eine Limonade oder eine Brause ist.

14. Verwendung eines gemäß dem Verfahren nach Anspruch 8 hergestellten Tees zur Herstellung eines Getränkes, insbesondere eines Erfrischungsgetränkes, wobei das Erfrischungsgetränk vorzugsweise ein Eistee, eine Limonade oder einer Brause ist.

15. Verwendung von gemäß dem Verfahren nach Anspruch 5 hergestellten Kakaostrunkpartikeln als Füllstoff für Lebensmittel.
